# EUROPEAN PATENT APPLICATION

(11) **EP 4 579 998 A2**
(43) Date of publication of application: **02.07.2025**
(21) Application number: 24220620.9
(22) Date of filing: 17.12.2024
(51) Int. Cl.: H02J 9/06, H02J 3/38

(54) **BACKUP BOX AND DRIVING METHOD THEREOF, AND PHOTOVOLTAIC SYSTEM**

(30) Priority: 25.12.2023 CN 202311816159
(71) Applicant: Huawei Digital Power Technologies Co., Ltd., Shenzhen, Guangdong 518043 (CN)
(72) Inventor: WANG, Hang, Shenzhen, 518043 (CN); CHEN, Wei, Shenzhen, 518043 (CN); FANG, Gang, Shenzhen, 518043 (CN); GUO, Yunhui, Shenzhen, 518043 (CN); XING, Fanfan, Shenzhen, 518043 (CN)
(74) Representative: Isarpatent

(57) **Abstract**

This application provides a backup box and a driving method thereof, and a photovoltaic system, and pertains to the field of power electronics technologies. The backup box provided in this application includes a first auxiliary power supply, a second auxiliary power supply, an internal load, and a control circuit. The first auxiliary power supply can supply power to the internal load based on a power supply voltage provided by the inverter. The second auxiliary power supply can supply power to the internal load based on a power supply voltage provided by a grid. The control circuit can control, based on a power supply voltage received by one or each of the first auxiliary power supply and the second auxiliary power supply, the other auxiliary power supply to be turned off, so that the other auxiliary power supply stops supplying power to the internal load. In other words, only one of two auxiliary power supplies supplies power to the internal load. Therefore, energy consumption of the auxiliary power supplies in the backup box can be effectively reduced.

## Description

### TECHNICAL FIELD

This application relates to the field of power electronics technologies, and in particular, to a backup box and a driving method thereof, and a photovoltaic system.

### BACKGROUND

In a power system, a backup box serves as a center between an inverter and a grid, and is configured to supply, based on a power supply voltage provided by the inverter and a power supply voltage provided by the grid, power to an external load accessing the power system.

The backup box usually includes an internal load, such as a digital processor. Because the power supply voltage provided by the inverter and the power supply voltage provided by the grid do not match an operating voltage of the internal load, two auxiliary power supplies usually need to be disposed in the backup box. The two auxiliary power supplies can respectively convert the power supply voltage provided by the inverter and the power supply voltage provided by the grid into an operating voltage required by the internal load, to supply power to the internal load.

However, when both the inverter and the grid provide the power supply voltages, the two auxiliary power supplies operate simultaneously, that is, the two auxiliary power supplies supply power to the internal load simultaneously. Consequently, energy consumption of the auxiliary power supplies in the backup box is high.

### SUMMARY

This application provides a backup box and a driving method thereof, and a photovoltaic system, to resolve a technical problem in a related technology that energy consumption of auxiliary power supplies in a backup box is high.

According to a first aspect, a backup box is provided. The backup box includes a first auxiliary power supply, a second auxiliary power supply, an internal load, and a control circuit. An input end of the backup box is configured to connect to an inverter, and an output end of the backup box is configured to connect to a grid. Both the first auxiliary power supply and the second auxiliary power supply are configured to supply power to the internal load based on received power supply voltages. In addition, a power supply voltage received by the first auxiliary power supply is from the inverter, and a power supply voltage received by the second auxiliary power supply is from the grid. The control circuit is configured to control the second auxiliary power supply to be turned off when the power supply voltage received by the first auxiliary power supply is greater than a first voltage threshold. Alternatively, the control circuit is configured to control the second auxiliary power supply to be turned off when the power supply voltage received by the first auxiliary power supply and the power supply voltage received by the second auxiliary power supply meet a grid connection condition. Alternatively, the control circuit is configured to control the first auxiliary power supply to be turned off when the power supply voltage received by the second auxiliary power supply is greater than a second voltage threshold. Alternatively, the control circuit is configured to control the first auxiliary power supply to be turned off when the power supply voltage received by the first auxiliary power supply and the power supply voltage received by the second auxiliary power supply meet a grid connection condition.

The control circuit can control, based on detected power supply voltages, one of the two auxiliary power supplies included in the backup box to be turned off, to stop supplying power to the internal load. That is, only one of the two auxiliary power supplies provides power to the internal load. Therefore, energy consumption of the auxiliary power supplies in the backup box can be effectively reduced.

Optionally, the control circuit may include a sampling subcircuit, a control subcircuit, and a switch. If the control circuit is configured to control the second auxiliary power supply to be turned off when the power supply voltage received by the first auxiliary power supply is greater than the first voltage threshold, a first end of the switch may be connected to an enable port of the second auxiliary power supply, a second end of the switch may be connected to a ground terminal, and a control end of the switch may be connected to the control subcircuit. The sampling subcircuit may be separately connected to the first auxiliary power supply and the control subcircuit. The control subcircuit may be configured to: detect, by using the sampling subcircuit, the power supply voltage received by the first auxiliary power supply, and may be configured to control the first end and the second end of the switch to be turned on when the power supply voltage received by the first auxiliary power supply is greater than the first voltage threshold. If the control circuit is configured to control the second auxiliary power supply to be turned off when the power supply voltage received by the first auxiliary power supply and the power supply voltage received by the second auxiliary power supply meet the grid connection condition, a first end of the switch may be connected to an enable port of the second auxiliary power supply, a second end of the switch may be connected to a ground terminal, and a control end of the switch may be connected to the control subcircuit. The sampling subcircuit may be separately connected to the first auxiliary power supply, the second auxiliary power supply, and the control subcircuit. The control subcircuit may be configured to: detect, by using the sampling subcircuit, the power supply voltage received by the first auxiliary power supply and the power supply voltage received by the second auxiliary power supply, and may be configured to control the first end and the second end of the switch to be turned on when the power supply voltage received by the first auxiliary power supply and the power supply voltage received by the second auxiliary power supply meet the grid connection condition. If the control circuit is configured to control the first auxiliary power supply to be turned off when the power supply voltage received by the second auxiliary power supply is greater than the second voltage threshold, a first end of the switch may be connected to an enable port of the first auxiliary power supply, a second end of the switch may be connected to a ground terminal, and a control end of the switch may be connected to the control subcircuit. The sampling subcircuit may be separately connected to the second auxiliary power supply and the control subcircuit. The control subcircuit may be configured to: detect, by using the sampling subcircuit, the power supply voltage received by the second auxiliary power supply, and may be configured to control the first end and the second end of the switch to be turned on when the power supply voltage received by the second auxiliary power supply is greater than the second voltage threshold. If the control circuit is configured to control the first auxiliary power supply to be turned off when the power supply voltage received by the first auxiliary power supply and the power supply voltage received by the second auxiliary power supply meet the grid connection condition, a first end of the switch may be connected to an enable port of the first auxiliary power supply, a second end of the switch may be connected to a ground terminal, and a control end of the switch may be connected to the control subcircuit. The sampling subcircuit may be separately connected to the first auxiliary power supply, the second auxiliary power supply, and the control subcircuit. The control subcircuit may be configured to: detect, by using the sampling subcircuit, the power supply voltage received by the first auxiliary power supply and the power supply voltage received by the second auxiliary power supply, and may be configured to control the first end and the second end of the switch to be turned on when the power supply voltage received by the first auxiliary power supply and the power supply voltage received by the second auxiliary power supply meet the grid connection condition.

The sampling subcircuit is disposed, so that the control subcircuit can reliably and flexibly sample a power supply voltage that needs to be detected. The switch is disposed to connect the enable port of the auxiliary power supply and the ground terminal in the backup box, so that the control subcircuit can control the enable port of the auxiliary power supply and the ground terminal to be connected. In this way, the enable port of the auxiliary power supply is grounded, and accordingly, the auxiliary power supply can be reliably turned off. The control circuit is simple in structure, and is easy to control.

Optionally, the sampling subcircuit may include at least one sampling resistor. The sampling resistor may be used by the control subcircuit to reliably sample a power supply voltage that needs to be detected. The sampling resistor is simple in structure, facilitating circuit design.

Optionally, the control subcircuit may include a digital signal processor (digital signal processor, DSP). The DSP may directly process a digital signal, detect a power supply voltage reliably and quickly, and control the auxiliary power supply in the backup box to be turned off based on a detection result.

Optionally, the control subcircuit may belong to the internal load. In this way, a circuit design can be simplified, facilitating circuit integration.

Optionally, the switch may include a transistor. A gate of the transistor is the control end of the switch, a first electrode of the transistor is the first end of the switch, and a second electrode of the transistor is the second end of the switch. To be specific, the gate of the transistor may be connected to the control subcircuit, the first electrode of the transistor may be connected to the enable port of the second auxiliary power supply or the enable port of the first auxiliary power supply, and the second electrode of the transistor may be connected to the ground terminal. The switch is disposed to include the transistor, which also facilitates circuit integration and simplifies a circuit design.

Optionally, the backup box may further include a first diode and a second diode. A positive electrode of the first diode may be connected to the first auxiliary power supply, a positive electrode of the second diode may be connected to the second auxiliary power supply. Both a negative electrode of the first diode and a negative electrode of the second diode may be connected to the internal load.

In this way, unidirectional conductivity of the diode may be utilized, so that both the first auxiliary power supply and the second auxiliary power supply transmit voltages to the internal load unidirectionally, thereby implementing reliable power supply to the internal load.

Optionally, each of the first auxiliary power supply and the second auxiliary power supply may be a switch power supply.

According to a second aspect, a driving method of a backup box is provided. The method is applied to a control circuit in the backup box provided in the first aspect. The backup box further includes a first auxiliary power supply and a second auxiliary power supply. The method includes: controlling the second auxiliary power supply to be turned off when a power supply voltage received by the first auxiliary power supply is greater than a first voltage threshold; or controlling the second auxiliary power supply to be turned off when a power supply voltage received by the first auxiliary power supply and a power supply voltage received by the second auxiliary power supply meet a grid connection condition; or controlling the first auxiliary power supply to be turned off when a power supply voltage received by the second auxiliary power supply is greater than a second voltage threshold; or controlling the first auxiliary power supply to be turned off when a power supply voltage received by the first auxiliary power supply and a power supply voltage received by the second auxiliary power supply meet a grid connection condition.

According to a third aspect, a photovoltaic system is provided. The photovoltaic system includes an inverter and the backup box provided in the first aspect. The inverter is connected to an input end of the backup box, an output end of the backup box is configured to connect to a grid. The inverter is configured to output an alternating current to the grid through the backup box.

In conclusion, this application provides a backup box and a driving method thereof, and a photovoltaic system. The backup box includes a first auxiliary power supply, a second auxiliary power supply, an internal load, and a control circuit. The first auxiliary power supply can supply power to the internal load based on a power supply voltage provided by the inverter. The second auxiliary power supply can supply power to the internal load based on a power supply voltage provided by the grid. A control circuit can control, based on a power supply voltage received by one or each of the first auxiliary power supply and the second auxiliary power supply, the other auxiliary power supply to be turned off, so that the other auxiliary power supply stops supplying power to the internal load. In other words, the internal load is supplied by only one of the two auxiliary power supplies. Therefore, energy consumption of the auxiliary power supplies in the backup box can be effectively reduced.

### BRIEF DESCRIPTION OF DRAWINGS

FIG. 1 is a diagram of a structure of a photovoltaic system according to an embodiment of this application;
FIG. 2 is a diagram of a structure of a backup box according to an embodiment of this application;
FIG. 3 is a diagram of a structure of another backup box according to an embodiment of this application;
FIG. 4 is a diagram of a structure of still another backup box according to an embodiment of this application;
FIG. 5 is a diagram of a structure of yet another backup box according to an embodiment of this application;
FIG. 6 is a diagram of a structure of still yet another backup box according to an embodiment of this application;
FIG. 7 is a schematic of a circuit structure of a backup box according to an embodiment of this application;
FIG. 8 is a diagram of a driving method of a backup box according to an embodiment of this application; and
FIG. 9 is a diagram of a structure of another photovoltaic system according to an embodiment of this application.

### DESCRIPTION OF EMBODIMENTS

With reference to the accompanying drawings, the following describes in detail a backup box and a driving method thereof, and a photovoltaic system provided in embodiments of this application. Key terms in embodiments of this application are first described.

Grid (grid): is a whole including substations and transmission and distribution lines of various voltages in a power system, and is also referred to as a public power grid or a grid for short.

Inverter (inverter, INV): is also referred to as a power converter, and is configured to convert a direct current (direct current, DC) output by a photovoltaic panel (also referred to as a solar panel) into an alternating current (alternating current, AC), to supply power to an external load that is connected to a power system or transmit power to a grid.

Backup box (backup box): connects an inverter and a grid, to implement on-grid/off-grid switching based on voltages between the grid and the inverter.

On-grid (on-grid): means that a power system operates depending on a grid.

Off-grid (off-grid): means that a power system operates independently of a grid. For example, an inverter can supply power to an external load when the inverter is off-grid, and can transmit an alternating current to a grid when the inverter is on-grid.

Backup load: is a type of external load, and is an important load that needs to be powered by an inverter and a photovoltaic panel when a power failure occurs on a grid side, for example, a lighting device in household loads.

Non-backup load: is another type of external load, and is an unimportant load that does not need to be powered when a power failure occurs on a grid side, to ensure that a backup load can be powered for a long time, for example, a smart household appliance in household loads.

Bypass circuit breaker: used when a backup box is faulty, where the bypass circuit breaker is manually closed to enable a grid to continue to supply power to an external load.

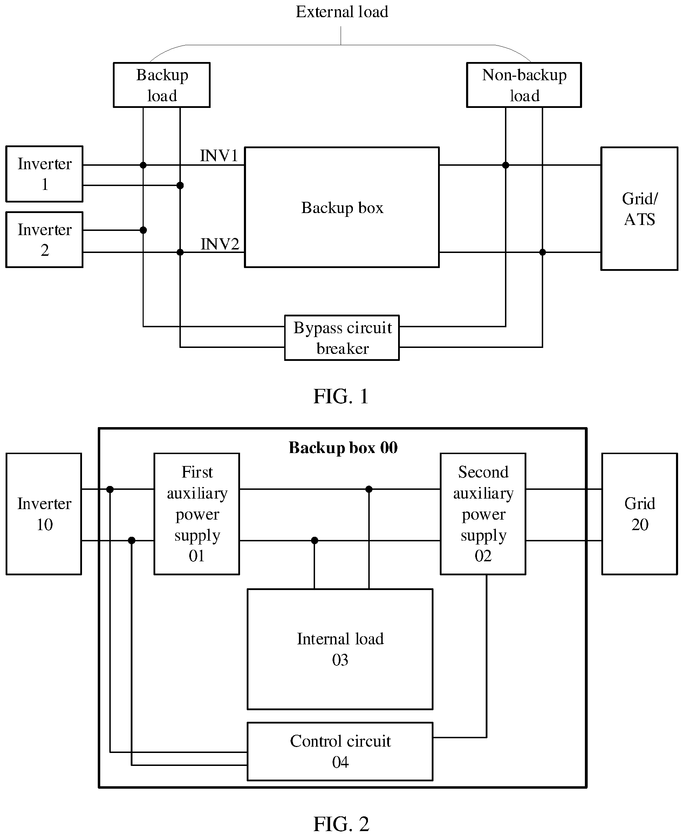

FIG. 1 is a diagram of a structure of a photovoltaic system according to an embodiment of this application. As shown in FIG. 1, the photovoltaic system may include: a backup box, an inverter (for example, an inverter 1 and an inverter 2) and a grid that are respectively connected to two ends of the backup box, a backup load, and a non-backup load. The backup load may be an important load in external loads connected to the photovoltaic system, for example, a home lighting device. The non-backup load may be an unimportant load in external loads connected to the photovoltaic system, for example, a smart household appliance. Optionally, in some embodiments, the grid may also be replaced with a power supply device using an automatic transfer switch (automatic transfer switch, ATS).

The backup box may be provided with five power ports with different functions: a port INV1 configured to connect to an inverter 1, a port INV2 configured to connect to an inverter 2, a port configured to connect to the grid, a backup port configured to connect to the backup load, and a non-backup port configured to connect to the non-backup load. In addition, with reference to FIG. 1, it can be further learned that, in the five power ports with different functions, the port connected to the inverter 1 may be shared with the port connected to the backup load, the port connected to the inverter 2 may be shared with the port connected to the backup load, and the port connected to the grid may be shared with the port connected to a non-backup load. It can be learned that the backup box may be provided with at least three ports to implement the foregoing five different functions. In addition, the photovoltaic system may further include a bypass circuit breaker. The bypass circuit breaker may be separately connected to the backup load, the non-backup load, and the grid.

The photovoltaic system provided in this embodiment of this application may include the following four main operating modes.
(1) When there is power on a grid side, and both the inverter and backup box operate properly, the inverter operates in an on-grid mode. The inverter converts a direct current DC output by a photovoltaic panel into an alternating current AC and sends the alternating current AC to the grid. Both the backup load and non-backup load can obtain power from the grid. In other words, the backup box may supply power to the backup load and the non-backup load based on a power supply voltage provided by the grid.
(2) When there is power on the grid side but the inverter is faulty and only the backup box functions normally, the inverter does not convert power. Both the backup load and non-backup load can obtain power from the grid side.
(3) When there is power on the grid side but both the inverter and backup box are faulty, the bypass circuit breaker may be manually closed, so that both the backup load and non-backup load obtain power from the grid side.
(4) When a power failure occurs on the grid side, and both the inverter and backup box function normally, the backup box is disconnected from the grid and the inverter operates in an off-grid mode. The inverter converts a direct current from the photovoltaic panel into an alternating current to supply power to the backup load.

Based on the foregoing several operating modes, it can be learned that the backup box is usually not used as an external load of the entire photovoltaic system, and is mainly used to control switching between on-grid and off-grid. Therefore, in the entire photovoltaic system, smaller energy consumption of the backup box is better. In addition, as described in the Background, because the backup box usually includes an internal load, two auxiliary power supplies are usually disposed in the backup box. One auxiliary power supply is separately connected to the inverter and the internal load, and is configured to: convert a power supply voltage provided by the inverter into a power supply voltage that is required for matching the internal load, and supply power to the internal load, where the auxiliary power supply is also referred to as an inverter-side auxiliary power supply. The other auxiliary power supply is separately connected to the grid and the internal load, and is configured to: convert a power supply voltage provided by the grid into a power supply voltage that is required for matching the internal load, and supply power to the internal load, where the auxiliary power supply is also referred to as a grid-side auxiliary power supply.

Currently, when a power failure occurs on a grid side (that is, off-grid), a grid-side auxiliary power supply cannot receive a power supply voltage and is turned off accordingly. When there is power on the grid side (that is, on-grid), because both the grid-side auxiliary power supply and an inverter-side auxiliary power supply can receive power supply voltages, both the grid-side auxiliary power supply and the inverter-side auxiliary power supply are turned on. In this way, in some scenarios (for example, an internal load is light), energy consumption of the grid-side auxiliary power supply and the inverter-side auxiliary power supply is high.

An embodiment of this application provides a backup box. The backup box can control one of two auxiliary power supplies to be turned off, thereby reducing energy consumption of the auxiliary power supply and achieving energy saving. As shown in FIG. 2, the backup box 00 includes a first auxiliary power supply 01, a second auxiliary power supply 02, an internal load 03, and a control circuit 04.

With reference to FIG. 1, an input end of the backup box 00 is configured to connect to an inverter 10, and an output end of the backup box 00 is configured to connect to a grid 20.

Both the first auxiliary power supply 01 and the second auxiliary power supply 02 are configured to supply power to the internal load 03 based on received power supply voltages. In addition, the power supply voltage received by the first auxiliary power supply 01 comes from the inverter 10, and the power supply voltage received by the second auxiliary power supply 02 comes from the grid 20.

The control circuit 04 is configured to control the second auxiliary power supply 02 to be turned off when the power supply voltage received by the first auxiliary power supply 01 is greater than a first voltage threshold.

Alternatively, the control circuit 04 is configured to control the second auxiliary power supply 02 to be turned off when the power supply voltage received by the first auxiliary power supply 01 and the power supply voltage received by the second auxiliary power supply 02 meet a grid connection condition.

Alternatively, the control circuit 04 is configured to control the first auxiliary power supply 01 to be turned off when the power supply voltage received by the second auxiliary power supply 02 is greater than a second voltage threshold.

Alternatively, the control circuit 04 is configured to control the first auxiliary power supply 01 to be turned off when the power supply voltage received by the first auxiliary power supply 01 and the power supply voltage received by the second auxiliary power supply 02 meet a grid connection condition.

Optionally, in this embodiment of this application, with reference to FIG. 1, the backup box 00 may include two inverters 10. Certainly, the quantity herein is merely an example for description. In other words, quantity of inverters 10 included in the backup box 00 may be flexibly adjusted according to a requirement of an application scenario.

Refer to FIG. 2. It may be understood that, the first auxiliary power supply 01 may be connected to the inverter 10 through an input end, to receive the power supply voltage provided by the inverter 10. The first auxiliary power supply 01 may be connected to the internal load 03 through an output end, to supply power to the internal load 03. Correspondingly, the first auxiliary power supply 01 is an inverter-side auxiliary power supply. In addition, the second auxiliary power supply 02 may be connected to the grid 20 through an input end, to receive the power supply voltage provided by the grid 20. The second auxiliary power supply 02 may be connected to the internal load 03 through an output end, to supply power to the internal load 03. Correspondingly, the second auxiliary power supply 02 is a grid-side auxiliary power supply.

Optionally, the first auxiliary power supply 01 may convert the power supply voltage provided by the inverter 10 into an operating voltage that is required by the internal load 03, to supply power to the internal load 03. Similarly, the second auxiliary power supply 02 may convert the power supply voltage provided by the grid 20 into the operating voltage that is required by the internal load 03, to supply power to the internal load 03. It may be understood that, both the power supply voltage provided by the inverter 10 and the power supply voltage provided by the grid 20 are generally greater than the operating voltage required by the internal load 03. Correspondingly, both the first auxiliary power supply 01 and the second auxiliary power supply 02 may be configured to convert a received relatively large power supply voltage into a relatively small power supply voltage, and then transmit the relatively small power supply voltage to the internal load 03. The internal load 03 may include a signal processor, and the signal processor may be configured to operate based on a received operating voltage.

In a first possible implementation, as shown in FIG. 2, the control circuit 04 may be connected to the input end of the first auxiliary power supply 01, to detect the power supply voltage received by the first auxiliary power supply 01, that is, detect the power supply voltage provided by the inverter 10. In addition, the control circuit 04 may be further connected to an enable port of the second auxiliary power supply 02, to control the second auxiliary power supply 02 to be turned off when it is detected that the power supply voltage received by the first auxiliary power supply 01 is greater than the first voltage threshold.

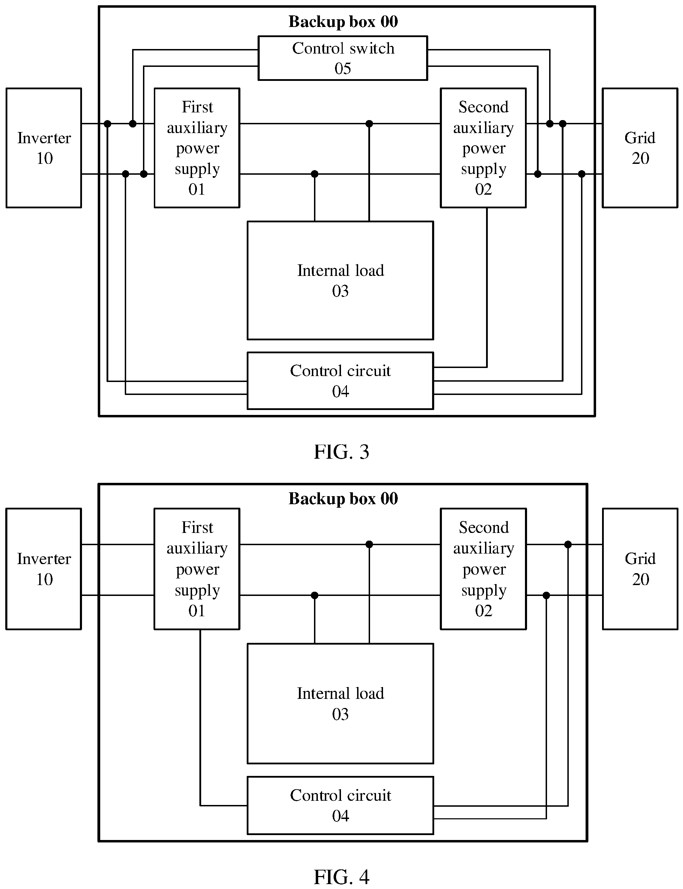

In a second possible implementation, as shown in FIG. 3, the control circuit 04 may be separately connected to the input end of the first auxiliary power supply 01 and the input end of the second auxiliary power supply 02, to detect the power supply voltage received by the first auxiliary power supply 01 and the power supply voltage received by the second auxiliary power supply 02, that is, detect the power supply voltage provided by the inverter 10 and the power supply voltage provided by the grid 20. In addition, the control circuit 04 may be further connected to an enable port of the second auxiliary power supply 02, to control the second auxiliary power supply 02 to be turned off when it is detected that the power supply voltage received by the first auxiliary power supply 01 and the power supply voltage received by the second auxiliary power supply 02 meet the grid connection condition.

In a third possible implementation, as shown in FIG. 4, the control circuit 04 may be connected to the input end of the second auxiliary power supply 02, to detect the power supply voltage received by the second auxiliary power supply 02, that is, detect the power supply voltage provided by the grid 20. In addition, the control circuit 04 may be further connected to an enable port of the first auxiliary power supply 01, to control the first auxiliary power supply 01 to be turned off when it is detected that the power supply voltage received by the second auxiliary power supply 02 is greater than the second voltage threshold.

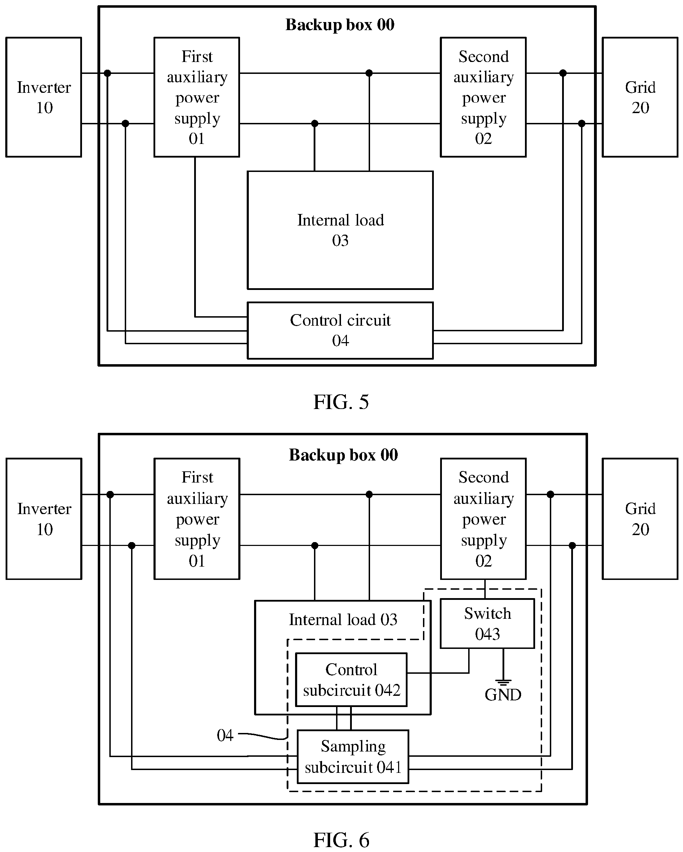

In a fourth possible implementation, as shown in FIG. 5, the control circuit 04 may be separately connected to the input end of the first auxiliary power supply 01 and the input end of the second auxiliary power supply 02, to detect the power supply voltage received by the first auxiliary power supply 01 and the power supply voltage received by the second auxiliary power supply 02, that is, detect the power supply voltage provided by the inverter 10 and the power supply voltage provided by the grid 20. In addition, the control circuit 04 may be further connected to an enable port of the first auxiliary power supply 01, to control the first auxiliary power supply 01 to be turned off when it is detected that the power supply voltage received by the first auxiliary power supply 01 and the power supply voltage received by the second auxiliary power supply 02 meet the grid connection condition.

It may be understood that each of the first auxiliary power supply 01 and the second auxiliary power supply 02 may supply power to the internal load 03 in an on state. Correspondingly, each auxiliary power supply stops supplying power to the internal load 03 in an off state. In some embodiments, if both the inverter 10 and the grid 20 can normally provide power supply voltages, the first auxiliary power supply 01 and the second auxiliary power supply 02 are simultaneously turned on and supply power to the internal load 03. As a result, energy of the auxiliary power supplies in the backup box 00 is wasted, and energy consumption of the auxiliary power supplies is high, which is not conducive to energy saving. However, in this embodiment of this application, when the control circuit 04 controls the first auxiliary power supply 01 or the second auxiliary power supply 02 in the backup box 00 to be turned off, the turned-off auxiliary power supply may stop supplying power to the internal load 03. In other words, in this case, only one auxiliary power supply that is not turned off and that is from the first auxiliary power supply 01 and the second auxiliary power supply 02 may be used to supply power to the internal load 03. In this way, it can be avoided that energy of the auxiliary power supplies in the backup box 00 is wasted, and energy consumption of the auxiliary power supplies may be reduced, which helps save energy.

Optionally, the first voltage threshold may be a voltage value prestored in the control circuit 04, and the first voltage threshold may be a voltage value that can ensure normal operation of the first auxiliary power supply 01. Correspondingly, that the power supply voltage received by the first auxiliary power supply 01 is greater than the first voltage threshold may indicate that the inverter 10 can reliably provide a power supply voltage, that is, the inverter 10 is powered, so that the first auxiliary power supply 01 can start based on the power supply voltage provided by the inverter 10 and supply power to the internal load 03. In other words, for the first implementation shown in FIG. 2, when detecting that the inverter 10 is powered, the control circuit 04 may control the second auxiliary power supply 02 to be turned off, so as to stop supplying power to the internal load 03.

Similarly, the second voltage threshold may also be a voltage value prestored in the control circuit 04, and the second voltage threshold may be a voltage value that can ensure normal operation of the second auxiliary power supply 02. Correspondingly, that the power supply voltage received by the second auxiliary power supply 02 is greater than the second voltage threshold may indicate that the grid 20 can reliably provide a power supply voltage, that is, the grid 20 is powered, so that the second auxiliary power supply 02 can start based on the power supply voltage provided by the grid 20 and supply power to the internal load 03. In other words, for the third implementation shown in FIG. 4, when detecting that the grid 20 is powered, the control circuit 04 may control the first auxiliary power supply 01 to be turned off, so as to stop supplying power to the internal load 03. The second voltage threshold may be the same as or different from the first voltage threshold.

Optionally, that the grid connection condition is met may mean that the power supply voltage received by the first auxiliary power supply 01 is equal to the power supply voltage received by the second auxiliary power supply 02, that is, the power supply voltage provided by the inverter 10 is equal to the power supply voltage provided by the grid 20. In other words, for the second implementation shown in FIG. 3, when detecting that the power supply voltage provided by the inverter 10 is equal to the power supply voltage provided by the grid 20, the control circuit 04 may control the second auxiliary power supply 02 to be turned off, so as to stop supplying power to the internal load 03. For the fourth implementation shown in FIG. 5, when detecting that the power supply voltage provided by the inverter 10 is equal to the power supply voltage provided by the grid 20, the control circuit 04 may control the first auxiliary power supply 01 to be turned off, so as to stop supplying power to the internal load 03.

Optionally, in this embodiment of this application, that the control circuit 04 controls the first auxiliary power supply 01 or the second auxiliary power supply 02 to be turned off after the grid connection condition is met may include the following two cases.

1. With reference to FIG. 3, it can be further learned that the backup box 00 may further include a control switch 05. The control switch 05 may be separately connected to the inverter 10 and the grid 20. After the control circuit 04 detects that the power supply voltage provided by the inverter 10 and the power supply voltage provided by the grid 20 meet the grid connection condition, the backup box 00 may first implement grid connection through the control switch 05, for example, establish a connection between the inverter 10 and the grid 20. In this case, both the first auxiliary power supply 01 and the second auxiliary power supply 02 may be turned on, and supply power to the internal load 03 simultaneously. After the grid connection is completed, the control circuit 04 may further control the first auxiliary power supply 01 or the second auxiliary power supply 02 to be turned off, so that only one of the two auxiliary power supplies provides power to the internal load 03. In this way, reliable grid connection can be implemented, and power can be reliably supplied to the internal load 03.

For example, the control circuit 04 may be further connected to the control switch 05 (not shown in FIG. 3). After detecting that the grid connection condition is met, the control circuit 04 may control the control switch 05 to be turned on, to implement grid connection. In addition, after detecting that the grid connection condition is not met, the control circuit 04 may control the control switch 05 to be turned off, to implement grid disconnection. Certainly, this embodiment of this application is not limited to that the control circuit 04 controls the control switch 05 to be turned on or off. For example, another controller dedicated to controlling the control switch 05 to be turned on or off may be further disposed in the internal load 03.

Optionally, with reference to FIG. 3, it may be further learned that a port that connects the control switch 05 and the inverter 10 may be shared with a port that connects the inverter 10 and the first auxiliary power supply 01. In addition, a port that connects the control switch 05 and the grid 20 may be shared with a port that connects the grid 20 and the second auxiliary power supply 02.

2. Once detecting that the power supply voltage provided by the inverter 10 and the power supply voltage provided by the grid 20 meet the grid connection condition, the control circuit 04 directly controls the first auxiliary power supply 01 or the second auxiliary power supply 02 to be turned off, so that only one of the two auxiliary power supplies provides power to the internal load 03, without waiting for completion of grid connection. That is, before the completion of grid connection, the turned-off auxiliary power supply is not turned on. In this way, control efficiency is higher.

The foregoing describes scenarios in which the control circuit 04 controls one of the first auxiliary power supply 01 and the second auxiliary power supply 02 to be turned off. In some scenarios, the control circuit 04 may alternatively control one auxiliary power supply to be turned on.

For example, as described previously, the control circuit 04 is configured to control, for example, the second auxiliary power supply 02, to be turned off. When the power supply voltage received by the first auxiliary power supply 01 is less than the first voltage threshold, that is, the first auxiliary power supply 01 cannot start based on the received power supply voltage and supply power to the internal load 03. The control circuit 04 may control the second auxiliary power supply 02 to be turned on. That the power supply voltage received by the first auxiliary power supply 01 is less than the first voltage threshold may indicate that the inverter 10 cannot reliably provide the power supply voltage, that is, the inverter 10 is powered off or faulty. In other words, in this embodiment of this application, when detecting that the inverter 10 is powered off or faulty, the control circuit 04 may control the second auxiliary power supply 02 to be turned on, so as to supply power to the internal load 03.

It may be understood that, in the first auxiliary power supply 01 and the second auxiliary power supply 02, an auxiliary power supply that is frequently turned on may be referred to as a primary auxiliary power supply, and an auxiliary power supply that can be controlled by the control circuit 04 to be turned off may be referred to as a backup auxiliary power supply.

The inverter 10 usually converts a direct current output by a photovoltaic panel, to output a power supply voltage. Therefore, in comparison with the grid 20, there is a relatively low probability that the inverter 10 is powered off (that is, the inverter 10 stops providing a power supply voltage). In addition, an energy storage is usually further disposed in a photovoltaic system to store electric energy provided by the photovoltaic panel for use by the inverter 10. Therefore, on a basis that the first auxiliary power supply 01 connected to the inverter 10 is set as the primary auxiliary power supply, and the second auxiliary power supply 02 connected to the grid 20 is set as the backup auxiliary power supply, energy consumption of the auxiliary power supplies in the backup box 00 can be reduced, and power can be reliably supplied to the internal load 03. In addition, compared with the grid 20, the photovoltaic panel generates less noise and fewer pollution emissions in a power generation process. Therefore, power can be reliably supplied to the internal load 03 while environment protection is achieved.

It may be understood that the backup box 00 provided in this embodiment of this application is mainly used in light-load scenarios. In some heavy-load scenarios, both the first auxiliary power supply 01 and the second auxiliary power supply 02 in the backup box 00 may need to be frequently turned on to supply power to the internal load 03 simultaneously. The light-load scenario and the heavy-load scenario are relative, and indicate a load capacity of the internal load 03. In a light-load scenario, the internal load 03 requires a small operating current. In this case, the internal load is considered to be light. In a heavy-load scenario, the internal load 03 requires a large operating current. In this case, the internal load is considered to be heavy.

In conclusion, this embodiment of this application provides the backup box. The backup box includes a first auxiliary power supply, a second auxiliary power supply, an internal load, and a control circuit. The first auxiliary power supply can supply power to the internal load based on a power supply voltage provided by an inverter. The second auxiliary power supply can supply power to the internal load based on a power supply voltage provided by a grid. The control circuit can control, based on a power supply voltage received by one or each of the first auxiliary power supply and the second auxiliary power supply, the other auxiliary power supply to be turned off, so that the other auxiliary power supply stops supplying power to the internal load. In other words, the internal load is supplied by only one of the two auxiliary power supplies. Therefore, energy consumption of the auxiliary power supplies in the backup box can be effectively reduced.

Optionally, FIG. 6 is a diagram of a structure of still yet another backup box according to an embodiment of this application. As shown in FIG. 6, a control circuit 04 may include a sampling subcircuit 041, a control subcircuit 042, and a switch 043.

For the first implementation shown in FIG. 2, a first end of the switch 043 may be connected to an enable port of a second auxiliary power supply 02, a second end of the switch 043 may be connected to a ground terminal GND, and a control end of the switch 043 may be connected to the control subcircuit 042. The sampling subcircuit 041 may be separately connected to a first auxiliary power supply 01 and the control subcircuit 042. The control subcircuit 042 may be configured to detect, by using the sampling subcircuit 041, a power supply voltage received by the first auxiliary power supply 01, and configured to control the first end and the second end of the switch 043 to be conducted when the power supply voltage received by the first auxiliary power supply 01 is greater than a first voltage threshold.

For the second implementation shown in FIG. 3, a first end of the switch 043 may be connected to an enable port of a second auxiliary power supply 02, a second end of the switch 043 may be connected to a ground terminal GND, and a control end of the switch 043 may be connected to the control subcircuit 042. The sampling subcircuit 041 may be separately connected to a first auxiliary power supply 01, the second auxiliary power supply 02, and the control subcircuit 042. The control subcircuit 042 may be configured to detect, by using the sampling subcircuit 041, a power supply voltage received by the first auxiliary power supply 01 and a power supply voltage received by the second auxiliary power supply 02, and configured to control the first end and the second end of the switch 043 to be conducted when the power supply voltage received by the first auxiliary power supply 01 and the power supply voltage received by the second auxiliary power supply 02 meet a grid connection condition. FIG. 6 shows a structure of a control circuit based on the structure shown in FIG. 3.

For the third implementation shown in FIG. 4, a first end of the switch 043 may be connected to an enable port of a first auxiliary power supply 01, a second end of the switch 043 may be connected to a ground terminal GND, and a control end of the switch 043 may be connected to the control subcircuit 042. The sampling subcircuit 041 may be separately connected to a second auxiliary power supply 02 and the control subcircuit 042. The control subcircuit 042 may be configured to detect, by using the sampling subcircuit 041, a power supply voltage received by the second auxiliary power supply 02, and configured to control the first end and the second end of the switch 043 to be conducted when the power supply voltage received by the second auxiliary power supply 02 is greater than a second voltage threshold.

For the fourth implementation shown in FIG. 5, a first end of the switch 043 may be connected to an enable port of a first auxiliary power supply 01, a second end of the switch 043 may be connected to a ground terminal GND, and a control end of the switch 043 may be connected to the control subcircuit 042. The sampling subcircuit 041 may be separately connected to the first auxiliary power supply 01, a second auxiliary power supply 02, and the control subcircuit 042. The control subcircuit 042 may be configured to detect, by using the sampling subcircuit 041, a power supply voltage received by the first auxiliary power supply 01 and a power supply voltage received by the second auxiliary power supply 02, and configured to control the first end and the second end of the switch 043 to be conducted when the power supply voltage received by the first auxiliary power supply 01 and the power supply voltage received by the second auxiliary power supply 02 meet a grid connection condition.

It may be understood that, for a turned-off auxiliary power supply in the first auxiliary power supply 01 and the second auxiliary power supply 02, the first end of the switch 043 is connected to an enable port of the auxiliary power supply, and the second end of the switch 043 is connected to the ground terminal GND. Therefore, when the control subcircuit 042 controls the first end and the second end of the switch 043 to be connected, the enable port of the auxiliary power supply can be connected to the ground terminal GND, that is, the enable port of the auxiliary power supply is grounded. In this case, the enable port of the auxiliary power supply is equivalent to receiving a disable signal, and the auxiliary power supply may be turned off based on the disable signal. Correspondingly, it can be learned that when the control subcircuit 042 controls the first end of the switch 043 to be disconnected from the second end of the switch 043, the enable port of the auxiliary power supply may be disconnected from the ground terminal GND. In this way, it may be considered that the enable port of the auxiliary power supply does not receive a disable signal, and further, the auxiliary power supply can be normally turned on.

Optionally, the ground terminal GND connected to the second end of the switch 043 may be shared with a ground terminal of another circuit in the backup box 00, for example, may be shared with a ground terminal GND in the control subcircuit 042. In this way, a terminal arrangement can be simplified, facilitating circuit integration.

It may be understood that the sampling subcircuit 041 is disposed, so that the control subcircuit 042 can reliably and flexibly sample a power supply voltage that needs to be detected. The switch 043 is disposed to connect the enable port of the auxiliary power supply and the ground terminal GND, so that the control subcircuit 042 can control the enable port of the auxiliary power supply and the ground terminal GND to be connected. In this way, the enable port of the auxiliary power supply is grounded, and accordingly, the auxiliary power supply can be reliably turned off. The control circuit 04 is simple in overall circuit structure, and is easy to control.

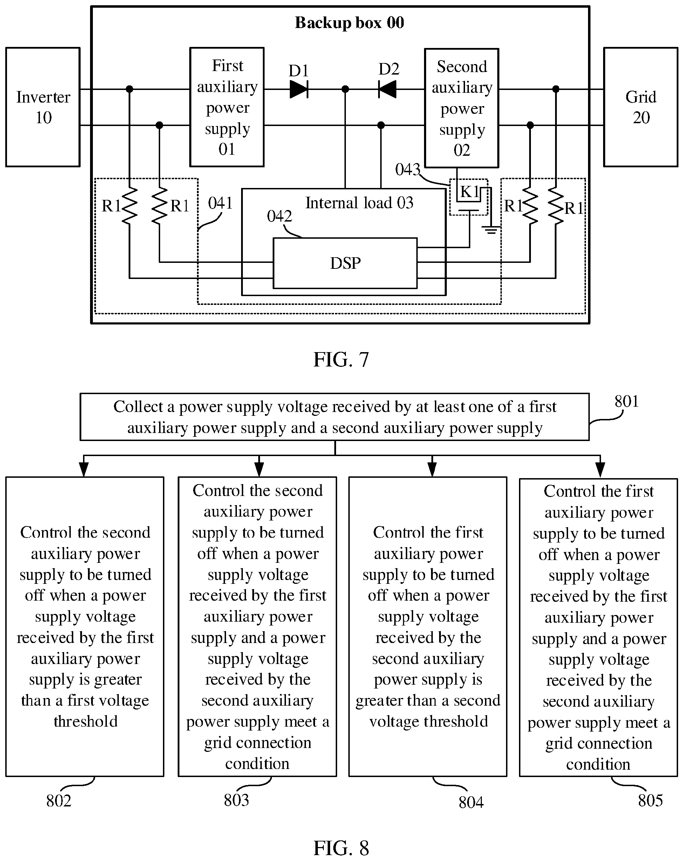

Optionally, FIG. 7 is a schematic of a circuit structure of a backup box according to an embodiment of this application. As shown in FIG. 7, a sampling subcircuit 041 may include at least one sampling resistor R1. The sampling resistor may be used by a control subcircuit 042 to reliably sample a power supply voltage that needs to be detected. The sampling resistor is simple in structure, facilitating circuit design of a control circuit 04.

For the first implementation shown in FIG. 2, one end of the sampling resistor R1 may be connected to a first auxiliary power supply 01, and the other end of the sampling resistor R1 may be connected to the control subcircuit 042. For example, one end of the sampling resistor R1 may be connected to an input end of the first auxiliary power supply 01.

For the third implementation shown in FIG. 4, one end of the sampling resistor R1 may be connected to a second auxiliary power supply 02, and the other end of the sampling resistor R1 may be connected to the control subcircuit 042. For example, one end of the sampling resistor R1 may be connected to an input end of the second auxiliary power supply 02.

For the second implementation shown in FIG. 3 and the fourth implementation shown in FIG. 5, the sampling subcircuit 041 may include a plurality of sampling resistors R1. In the plurality of sampling resistors R1, one end of a part of sampling resistors R1 may be connected to a first auxiliary power supply 01, and one end of the other part of sampling resistors R1 may be connected to a second auxiliary power supply 02. FIG. 7 shows a circuit structure based on the structure shown in FIG. 3.

It may be understood that, a photovoltaic system usually has a positive lead and a negative lead. Therefore, the second implementation shown in FIG. 3 is used as an example, and it may be learned from FIG. 7 that the sampling subcircuit 041 may include two sampling resistors R1 connected to the first auxiliary power supply 01 and two sampling resistors R1 connected to the second auxiliary power supply 02. In addition, in the two sampling resistors R1 connected to the first auxiliary power supply 01, one sampling resistor R1 may be separately connected to a positive lead (that is, a positive electrode of an input end of the first auxiliary power supply 01) and the control subcircuit 042. The other sampling resistor R1 may be separately connected to a negative lead (that is, a negative electrode of the input end of the first auxiliary power supply 01) and the control subcircuit 042. In the two sampling resistors R1 connected to the second auxiliary power supply 02, one sampling resistor R1 may be separately connected to a positive lead (that is, a positive electrode of an input end of the second auxiliary power supply 02) and the control subcircuit 042. The other sampling resistor R1 may be separately connected to a negative lead (that is, a negative electrode of the input end of the second auxiliary power supply 02) and the control subcircuit 042.

Optionally, still refer to FIG. 7. It can be learned that the control subcircuit 042 may include a digital signal processor DSP. For example, the DSP may be connected to the other end of each of four sampling resistors R1, to detect a power supply voltage.

It may be understood that the DSP may directly process a digital signal, and therefore, the DSP may detect a power supply voltage reliably and quickly, and control the auxiliary power supply to be turned off based on a detection result.

Optionally, still refer to FIG. 7. It can be learned that the control subcircuit 042 (for example, the DSP shown in FIG. 7) may belong to an internal load 03, that is, belong to a part of the internal load 03. In this way, a circuit arrangement can be simplified, facilitating circuit integration.

Optionally, still refer to FIG. 7. It can be learned that the switch 043 may include a transistor K1.

A gate of the transistor K1 may be a control end of the switch 043, a first electrode of the transistor K1 may be a first end of the switch 043, and a second electrode of the transistor K1 may be a second end of the switch 043. In other words, the gate of the transistor K1 may be connected to the control subcircuit 042 (for example, the DSP), and the second electrode of the transistor K1 may be connected to a ground terminal GND. In addition, for the first implementation shown in FIG. 2 and the second implementation shown in FIG. 3, it can be learned with reference to FIG. 7 that the first electrode of the transistor K1 may be connected to an enable port of the second auxiliary power supply 02. For the third implementation shown in FIG. 4 and the fourth implementation shown in FIG. 5, the first electrode of the transistor K1 may be connected to an enable port of the first auxiliary power supply 01.

The switch 043 is disposed to include the transistor K1, which may also facilitate circuit integration of the control circuit 04 and simplify a circuit design. The transistor K1 may be an N-type transistor or a P-type transistor.

It may be understood that, if the transistor K1 is an N-type transistor, the control subcircuit 042 may control the transistor K1 to be turned on by transmitting a high-potential gate signal to the gate of the transistor K1, so that the first electrode and the second electrode of the transistor K1 are connected. In addition, the control subcircuit 042 may control the transistor K1 to be cut off by transmitting a low-potential gate signal to the gate of the transistor K1, so that the first electrode and the second electrode of the transistor K1 are disconnected. If the transistor K1 is a P-type transistor, the control subcircuit 042 may control the transistor K1 to be turned on by transmitting a low-potential gate signal to the gate of the transistor K1, so that the first electrode and the second electrode of the transistor K1 are connected. In addition, the control subcircuit 042 may control the transistor K1 to be cut off by transmitting a high-potential gate signal to the gate of the transistor K1, so that the first electrode and the second electrode of the transistor K1 are disconnected. The high potential and the low potential are relative.

It may be understood that the transistor K1 may be a thin film transistor, a field-effect transistor, or another device with a same characteristic. In addition, because a source and a drain of the transistor K1 used herein are symmetric, the source and the drain of the transistor K1 may be interchanged. For example, the source may be referred to as the first electrode, and the drain may be referred to as the second electrode; or the drain may be referred to as the first electrode, and the source may be referred to as the second electrode. According to the form in the accompanying drawing, a middle end of the transistor K1 is a gate, a signal input end is a source, and a signal output end is a drain.

Optionally, still refer to FIG. 7. It can be learned that the backup box may further include a first diode D1 and a second diode D2. A positive electrode of the first diode D1 may be connected to the first auxiliary power supply 01, and a positive electrode of the second diode D2 may be connected to the second auxiliary power supply 02. Both a negative electrode of the first diode D1 and a negative electrode of the second diode D2 may be connected to the internal load 03.

Because the diode features unidirectional conductivity, with reference to FIG. 7, the first diode D1 is disposed, so that the first auxiliary power supply 01 may transmit a voltage to the internal load 03 unidirectionally. The second diode D2 is disposed, so that the second auxiliary power supply 02 may transmit a voltage to the internal load 03 unidirectionally. In this way, it can be avoided that voltages in the internal load 03 are reversely transmitted to the first auxiliary power supply 01 and the second auxiliary power supply 02 to cause the backup box 00 to operate in a disorderly manner. That is, it can be ensured that the backup box 00 operates reliably.

Optionally, each of the first auxiliary power supply 01 (namely, an inverter-side auxiliary power supply) and the second auxiliary power supply 02 (namely, a grid-side auxiliary power supply) may be a switch power supply (switch power supply, SPS). Correspondingly, the inverter-side auxiliary power supply may also be referred to as an INV SPS, and the grid-side auxiliary power supply may also be referred to as a grid SPS.

The foregoing uses the backup box as an example for description. It may be understood that the solutions provided in embodiments of this application may be further applied to another device, for example, may be further applied to an inverter. For the inverter, both a first auxiliary power supply 01 and a second auxiliary power supply 02 may be connected to an internal load of the inverter. In the first auxiliary power supply 01 and the second auxiliary power supply 02, one auxiliary power supply may be connected to a photovoltaic panel and supply power to the internal load based on a power supply voltage provided by the photovoltaic panel. The other auxiliary power supply may be connected to a grid and supply power to the internal load based on a power supply voltage provided by the grid. The control circuit 04 may flexibly control one of auxiliary power supplies to be turned on or off, to effectively reduce energy consumption of the auxiliary power supplies.

It may be further understood that in embodiments of this application, an example in which the backup box includes two auxiliary power supplies: the first auxiliary power supply 01 and the second auxiliary power supply 02 is used for description. In some other embodiments, the backup box may include more auxiliary power supplies. For example, the backup box may further include a third auxiliary power supply other than the two auxiliary power supplies, that is, the backup box may include three or more auxiliary power supplies.

In conclusion, this embodiment of this application provides a backup box. The backup box includes a first auxiliary power supply, a second auxiliary power supply, an internal load, and a control circuit. The first auxiliary power supply can supply power to the internal load based on a power supply voltage provided by an inverter. The second auxiliary power supply can supply power to the internal load based on a power supply voltage provided by a grid. The control circuit can control, based on a power supply voltage received by one or each of the first auxiliary power supply and the second auxiliary power supply, the other auxiliary power supply to be turned off, so that the other auxiliary power supply stops supplying power to the internal load. In other words, the internal load is supplied by only one of the two auxiliary power supplies. Therefore, energy consumption of the auxiliary power supplies in the backup box can be effectively reduced.

An embodiment of this application further provides a driving method of a backup box. The method may be applied to a control circuit 04 in the backup box 00 shown in any one of FIG. 2 to FIG. 7. Refer to FIG. 2 to FIG. 7. It can be learned that the backup box 00 further includes a first auxiliary power supply 01 and a second auxiliary power supply 02. As shown in FIG. 8, the method includes the following steps.

Step 801: Collect a power supply voltage received by at least one of a first auxiliary power supply and a second auxiliary power supply.

Step 802: Control the second auxiliary power supply to be turned off when a power supply voltage received by the first auxiliary power supply is greater than a first voltage threshold.

Step 803: Control the second auxiliary power supply to be turned off when the power supply voltage received by the first auxiliary power supply and a power supply voltage received by the second auxiliary power supply meet a grid connection condition.

Step 804: Control the first auxiliary power supply to be turned off when the power supply voltage received by the second auxiliary power supply is greater than a second voltage threshold.

Step 805: Control the first auxiliary power supply to be turned off when the power supply voltage received by the first auxiliary power supply and the power supply voltage received by the second auxiliary power supply meet the grid connection condition.

Optionally, with reference to FIG. 2 and the foregoing descriptions, the control circuit 04 may be separately connected to an input end of the first auxiliary power supply 01 and an enable port of the second auxiliary power supply 02. The control circuit 04 may detect a power supply voltage received by the first auxiliary power supply 01 from an inverter 10, and may control the second auxiliary power supply 02 to be turned off when the power supply voltage received by the first auxiliary power supply 01 is greater than the first voltage threshold. In this way, only the first auxiliary power supply 01 supplies power to an internal load 03 in the backup box 00, thereby effectively reducing energy consumption of the auxiliary power supplies.

Alternatively, with reference to FIG. 3 and the foregoing descriptions, the control circuit 04 may be separately connected to an input end of the first auxiliary power supply 01, an input end of the second auxiliary power supply 02, and an enable port of the second auxiliary power supply 02. The control circuit 04 may detect a power supply voltage received by the first auxiliary power supply 01 from an inverter 10 and a power supply voltage received by the second auxiliary power supply 02 from a grid 20, and may control the second auxiliary power supply 02 to be turned off when the power supply voltage received by the first auxiliary power supply 01 and the power supply voltage received by the second auxiliary power supply 02 meet the grid connection condition. In this way, only the first auxiliary power supply 01 supplies power to an internal load 03 in the backup box 00, thereby effectively reducing energy consumption of the auxiliary power supplies.

Alternatively, with reference to FIG. 4 and the foregoing descriptions, the control circuit 04 may be separately connected to an input end of the second auxiliary power supply 02 and an enable port of the first auxiliary power supply 01. The control circuit 04 may detect a power supply voltage received by the second auxiliary power supply 02 from a grid 20, and may control the first auxiliary power supply 01 to be turned off when a power supply voltage received by the second auxiliary power supply 02 is greater than the second voltage threshold. In this way, only the second auxiliary power supply 02 supplies power to an internal load 03 in the backup box 00, thereby effectively reducing energy consumption of the auxiliary power supplies.

Alternatively, with reference to FIG. 5 and the foregoing descriptions, the control circuit 04 may be separately connected to an input end of the first auxiliary power supply 01, an input end of the second auxiliary power supply 02, and an enable port of the first auxiliary power supply 01. The control circuit 04 may detect a power supply voltage received by the first auxiliary power supply 01 from an inverter 10 and a power supply voltage received by the second auxiliary power supply 02 from a grid 20, and may control the first auxiliary power supply 01 to be turned off when the power supply voltage received by the first auxiliary power supply 01 and the power supply voltage received by the second auxiliary power supply 02 meet the grid connection condition. In this way, only the second auxiliary power supply 02 supplies power to an internal load 03 in the backup box 00, thereby effectively reducing energy consumption of the auxiliary power supplies.

It may be understood that, because the driving method of the backup box has basically same implementations and technical effects as a control circuit in the backup box described in the foregoing embodiment, for brevity, the implementations and technical effects of the driving method are not described herein.

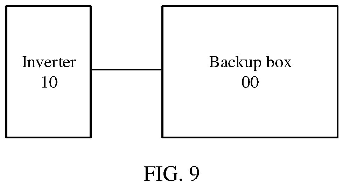

An embodiment of this application further provides a photovoltaic system. With reference to a diagram of a structure of another photovoltaic system shown in each of FIG. 1 and FIG. 9, it can be learned that the photovoltaic system includes an inverter 10 and the backup box 00 shown in any one of FIG. 2 to FIG. 7.

With reference to FIG. 1, the inverter 10 is connected to an input end of the backup box 00, an output end of the backup box 00 is configured to connect to a grid 20, and the inverter 10 is configured to output an alternating current AC to the grid 20 through the backup box 00.

Optionally, the grid 20 may be a single-phase grid with single-phase power supply, or may be a three-phase grid with three-phase power supply. As the name implies, the single-phase grid may use a phase wire (such as a live wire) and a neutral wire (such as a zero wire) to supply power, and a power supply voltage provided by the single-phase grid is usually 220 volts (V). The three-phase grid may use three phase wires for power supply. A power supply voltage provided by the three-phase grid is a combination of three groups of single-phase alternating currents with an equal amplitude, a same frequency, and a phase difference of 120 degrees in sequence. The power supply voltage provided by the three-phase grid is usually 380 V It may be understood that one phase wire used in the single-phase grid may be any one of the three phase wires used in the three-phase grid.

In embodiments of this application, the terms "first", "second", and "third" are merely used for description, and shall not be understood as an indication or implication of relative importance. The term "at least one" means one or more, and "a plurality of" means two or more.

The term "and/or" in this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A backup box, wherein the backup box comprises: a first auxiliary power supply, a second auxiliary power supply, an internal load, and a control circuit;
an input end of the backup box is configured to connect to an inverter, and an output end of the backup box is configured to connect to a grid;
both the first auxiliary power supply and the second auxiliary power supply are configured to supply power to the internal load based on received power supply voltages, wherein the power supply voltage received by the first auxiliary power supply is from the inverter, and the power supply voltage received by the second auxiliary power supply is from the grid; and
the control circuit is configured to control the second auxiliary power supply to be turned off when the power supply voltage received by the first auxiliary power supply is greater than a first voltage threshold; or
the control circuit is configured to control the second auxiliary power supply to be turned off when the power supply voltage received by the first auxiliary power supply and the power supply voltage received by the second auxiliary power supply meet a grid connection condition; or
the control circuit is configured to control the first auxiliary power supply to be turned off when the power supply voltage received by the second auxiliary power supply is greater than a second voltage threshold; or
the control circuit is configured to control the first auxiliary power supply to be turned off when the power supply voltage received by the first auxiliary power supply and the power supply voltage received by the second auxiliary power supply meet a grid connection condition.

2. The backup box according to claim 1, wherein the control circuit comprises a sampling subcircuit, a control subcircuit, and a switch, wherein
if the control circuit is configured to control the second auxiliary power supply to be turned off when the power supply voltage received by the first auxiliary power supply is greater than the first voltage threshold, a first end of the switch is connected to an enable port of the second auxiliary power supply, a second end of the switch is connected to a ground terminal, and a control end of the switch is connected to the control subcircuit; the sampling subcircuit is separately connected to the first auxiliary power supply and the control subcircuit; and the control subcircuit is configured to: detect, by using the sampling subcircuit, the power supply voltage received by the first auxiliary power supply, and control the first end and the second end of the switch to be turned on when the power supply voltage received by the first auxiliary power supply is greater than the first voltage threshold;
if the control circuit is configured to control the second auxiliary power supply to be turned off when the power supply voltage received by the first auxiliary power supply and the power supply voltage received by the second auxiliary power supply meet the grid connection condition, a first end of the switch is connected to an enable port of the second auxiliary power supply, a second end of the switch is connected to a ground terminal, and a control end of the switch is connected to the control subcircuit; the sampling subcircuit is separately connected to the first auxiliary power supply, the second auxiliary power supply, and the control subcircuit; and the control subcircuit is configured to: detect, by using the sampling subcircuit, the power supply voltage received by the first auxiliary power supply and the power supply voltage received by the second auxiliary power supply, and control the first end and the second end of the switch to be turned on when the power supply voltage received by the first auxiliary power supply and the power supply voltage received by the second auxiliary power supply meet the grid connection condition;
if the control circuit is configured to control the first auxiliary power supply to be turned off when the power supply voltage received by the second auxiliary power supply is greater than the second voltage threshold, a first end of the switch is connected to an enable port of the first auxiliary power supply, a second end of the switch is connected to a ground terminal, and a control end of the switch is connected to the control subcircuit; the sampling subcircuit is separately connected to the second auxiliary power supply and the control subcircuit; and the control subcircuit is configured to: detect, by using the sampling subcircuit, the power supply voltage received by the second auxiliary power supply, and control the first end and the second end of the switch to be turned on when the power supply voltage received by the second auxiliary power supply is greater than the second voltage threshold; or
if the control circuit is configured to control the first auxiliary power supply to be turned off when the power supply voltage received by the first auxiliary power supply and the power supply voltage received by the second auxiliary power supply meet the grid connection condition, a first end of the switch is connected to an enable port of the first auxiliary power supply, a second end of the switch is connected to a ground terminal, and a control end of the switch is connected to the control subcircuit; the sampling subcircuit is separately connected to the first auxiliary power supply, the second auxiliary power supply, and the control subcircuit; and the control subcircuit is configured to: detect, by using the sampling subcircuit, the power supply voltage received by the first auxiliary power supply and the power supply voltage received by the second auxiliary power supply, and control the first end and the second end of the switch to be turned on when the power supply voltage received by the first auxiliary power supply and the power supply voltage received by the second auxiliary power supply meet the grid connection condition.

3. The backup box according to claim 2, wherein the sampling subcircuit comprises at least one sampling resistor.

4. The backup box according to claim 2 or 3, wherein the control subcircuit comprises a digital signal processor.

5. The backup box according to any one of claims 2 to 4, wherein the control subcircuit belongs to the internal load.

6. The backup box according to any one of claims 2 to 5, wherein the switch comprises a transistor; and
a gate of the transistor is the control end of the switch, a first electrode of the transistor is the first end of the switch, and a second electrode of the transistor is the second end of the switch.

7. The backup box according to any one of claims 1 to 6, wherein the backup box further comprises a first diode and a second diode; and
a positive electrode of the first diode is connected to the first auxiliary power supply, a positive electrode of the second diode is connected to the second auxiliary power supply, and both a negative electrode of the first diode and a negative electrode of the second diode are connected to the internal load.

8. The backup box according to any one of claims 1 to 7, wherein both the first auxiliary power supply and the second auxiliary power supply are switch power supplies.

9. A driving method of a backup box, applied to a control circuit in the backup box according to any one of claims 1 to 8, wherein the backup box further comprises a first auxiliary power supply and a second auxiliary power supply; and the method comprises:
controlling the second auxiliary power supply to be turned off when a power supply voltage received by the first auxiliary power supply is greater than a first voltage threshold; or
controlling the second auxiliary power supply to be turned off when a power supply voltage received by the first auxiliary power supply and a power supply voltage received by the second auxiliary power supply meet a grid connection condition; or
controlling the first auxiliary power supply to be turned off when a power supply voltage received by the second auxiliary power supply is greater than a second voltage threshold; or
controlling the first auxiliary power supply to be turned off when a power supply voltage received by the first auxiliary power supply and a power supply voltage received by the second auxiliary power supply meet a grid connection condition.

10. A photovoltaic system, wherein the photovoltaic system comprises an inverter and the backup box according to any one of claims 1 to 8; and
the inverter is connected to an input end of the backup box, an output end of the backup box is configured to connect to a grid, and the inverter is configured to output an alternating current to the grid through the backup box.
